# EUROPÄISCHE PATENTANMELDUNG

(11) **EP 1 693 938 A1**
(43) Veröffentlichungstag der Anmeldung: **23.08.2006**
(21) Anmeldenummer: 06101501.2
(22) Anmeldetag: 10.02.2006
(51) Int. Cl.: H02B 11/127

(54) **Einschubrahmen für einen Niederspannungs-Leistungsschalter mit zwei getrennten Kulissenelementen**

(30) Priorität: 16.02.2005 DE 102005008305
(71) Anmelder: SIEMENS AKTIENGESELLSCHAFT, 80333 München (DE)
(72) Erfinder: Leye, Thomas, 13409, Berlin (DE); Losch, Stefan, 13595, Berlin (DE); Milewski, Peter, 12355, Berlin (DE)

(57) **Zusammenfassung**

Bei einem Einschubrahmen für einen Niederspannungs-Leistungsschalter dient eine Kulisse zum Führen eines Kurbelzapfens, welcher über eine Kurbel in einem Schaltgerät bewegt wird, das in den Einschubrahmen einschiebbar ist. Erfindungsgemäß ist die Kulisse aus zwei getrennten Kulissenelementen (42, 44) gebildet. Bevorzugt ist ein kleineres Kulissenelement (44) aus Vergütungsstahl hergestellt, und ein größeres (42) aus gewöhnlichem Stahl.

## Beschreibung

Die vorliegende Erfindung betrifft einen Einschubrahmen für einen Niederspannungs-Leistungsschalter, wie er beispielsweise aus der DE 201 06 688 U1 oder der WO 2004/040726 A1 bekannt ist. Derartige Einschubrahmen sind kastenförmige Gebilde aus Blech, in denen an der Hinterseite mindestens ein Kontakt mit einer Kupferschiene vorhanden ist. Das eigentliche Schaltgerät wird in diesen Einschubrahmen eingeschoben. Beim Einschub können Montageschienen das Schaltgerät führen. Kurz bevor das Schaltgerät vollständig in den Einschubrahmen eingeschoben ist, zirka 50 mm vor der Endlage, müssen jedoch besonders hohe Kräfte aufgebracht werden, um das Schaltgerät weiter einzuführen, weil Kontakte an dem Schaltgerät mit Kontaktmessern in dem Einschubrahmen in mechanische und damit elektrische Verbindung gebracht werden müssen. Üblich sind auch Schaltanlagen, bei denen Kontaktmesser am Schalter und die dazugehörigen Kontakte in der Rückwand des Einschubrahmens angebracht sind. Da ein Mensch ohne Verwendung von Hebelwirkungen diese Kräfte zum Bilden der elektrischen Kontakte nicht aufbringen kann, weisen die Schaltgeräte in der Regel quer zur Schubrichtung eine Kurbel auf. Der Kurbelmechanismus bildet einen Verfahrantrieb, mit dessen Hilfe die Kontakte des Schaltgeräts an die Kontaktmesser in dem Einschubrahmen gedrückt werden. Des Weiteren wird das Schaltgerät durch den Kurbelmechanismus in der vollständig in den Einschubrahmen eingeschobenen Position verriegelt. Zur Führung des Schaltgeräts dient jeweils eine Kulisse an den seitlichen Wänden des Einschubrahmens, in der ein Zapfen, welcher von der Kurbel bewegt wird, gleiten kann. In der Kulisse gleitet der Zapfen in der Regel erst nach oben, dann nach unten, aber jedenfalls quer zur Bewegungsrichtung, während die Kurbel in die Waagerechte gedreht wird.

Im Stand der Technik nehmen herkömmlich verwendete Kulissen relativ viel Platz an der Seitenwand des Einschubrahmens in Anspruch. Hierdurch ist insbesondere bei kleinen Bauhöhen des Niederspannungs-Leistungsschalters kein Platz für zusätzliches am Einschubrahmen installiertes Zubehör.

Ferner wirken bei Kurzschlüssen in dem Niederspannungs-Leistungsschalter, bei denen für die Dauer von ca. 1 Sek. Ströme bis zu 100.000 A fließen können, starke mechanische Kräfte auf die Welle der Kurbel und über diese Welle auf die Kulisse ein. Es ist schwierig, die Kulisse so stabil herzustellen, dass sie diesen Kräften standhält.

Es ist daher Aufgabe der Erfindung, eine stabile Kulisse zu schaffen, die gleichzeitig starke mechanische Kräfte aufnehmen kann.

Die Erfindung löst diese Aufgabe dadurch, dass die Kulisse nicht mehr wie zuvor aus einem einzigen Kulissenelement gebildet ist, also einstückig ist, sondern dass die Kulisse aus zwei getrennten Kulissenelementen gebildet ist. Die Führung des Zapfens erfolgt dabei durch geeignete Formung der beiden getrennten Kulissenelemente zwischen den beiden Kulissenelementen.

Durch die Aufteilung der Kulisse in zwei getrennte Elemente ist es möglich, diese beiden Elemente aus unterschiedlichen Materialien herzustellen. Insbesondere ein kleineres Kulissenelement kann aus Vergütungsstahl hergestellt sein, während ein großes Kulissenelement aus herkömmlichem Stahl hergestellt sein kann. Das kleinere Kulissenelement kann so angeordnet sein, dass es dasjenige Kulissenelement ist, auf das bei einem Kurzschluss die mechanischen Kräfte einwirken. Herkömmlicherweise muss es hierfür an der Seite angeordnet sein, von der der Einschub der Schaltanlage her erfolgt. Das kleinere Kulissenelement kann die Form eines Rechtecks haben, wobei auf der dem größeren Kulissenelement zugewandten Seite die Führung für den Kurbelzapfen sichergestellt sein muss, die Rechtecksform also leicht abgerundet sein muss oder auch abgefasst sein kann.

Das größere Element kann einen Abschnitt haben, der über das kleine Kulissenelement hinausragt, und an dem eine gekrümmte Führungsfläche für den Kurbelzapfen ausgebildet ist. Diese Führungsfläche dient dazu, den Kurbelzapfen zu Beginn der Führung in der Kulisse zu führen, wonach er dann in den Zwischenraum zwischen die beiden Kulissenelemente geführt wird.

Das größere Kulissenelement kann sogar L-förmig sein, wobei die L-Form es ermöglicht, an dem unteren Schenkel der L-Form eine Führung für eine Montageschiene unterhalb der Kulisse vorzusehen. Durch diese Doppelfunktion des größeren Kulissenelements wird besonders viel Platz gespart.

Die beiden Kulissenelemente sind an der zugehörigen Rahmenwand einfach angenietet.

Die Kulissenelemente können die unterschiedlichsten Formen haben, solange nur die Funktion einer Kulisse gewährleistet ist, d. h. dass sie vorliegend zum Führen des Kurbelzapfens dienen. Insbesondere muss nicht unbedingt das Kulissenelement, welches aus Vergütungsstahl hergestellt ist, das kleinere Kulissenelement sein. Aus Kostengründen ist Letzteres jedoch eine vorteilhafte Ausführungsform.

Die Erfindung wird nachfolgend unter Bezug auf die Zeichnung näher beschrieben, in der:
- FIG 1: eine Kulisse gemäß dem Stand der Technik an der Rahmenwand eines Einschubrahmens zeigt,
- FIG 2: schematisch zeigt, wie im Stand der Technik ein Schaltgerät in einen Einschubrahmen eingeführt wird,
- FIG 3: detailliert zeigt, wie der Zapfen der Kurbel in der Kulisse des Stands der Technik geführt wird, und
- FIG 4: die Kulisse mit den beiden getrennten Kulissenelementen gemäß der Erfindung zeigt.

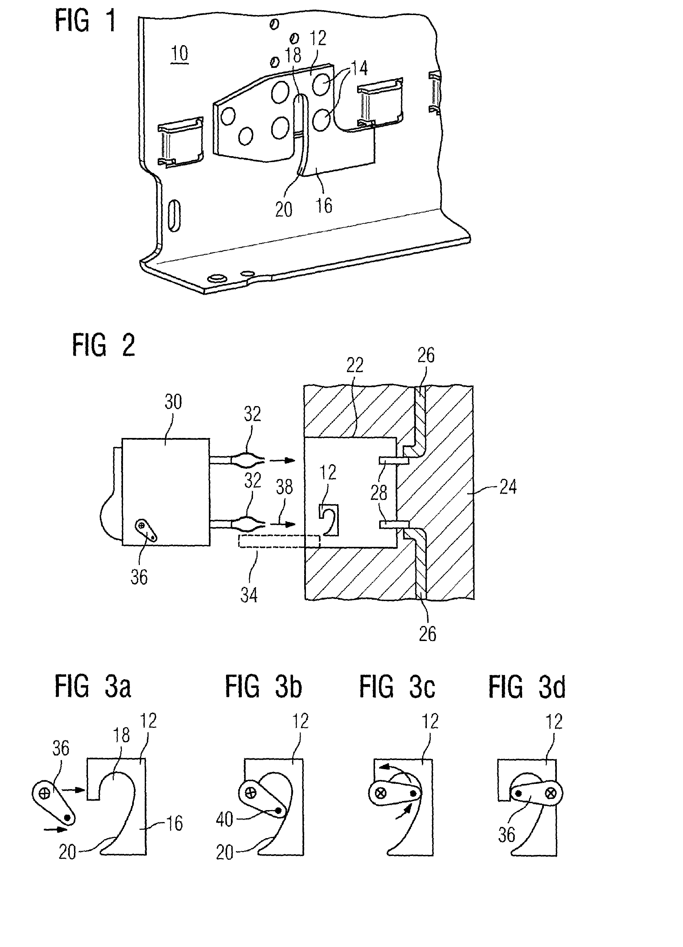

Die in FIG 1 gezeigte Rahmenwand 10 eines Einschubrahmens ist eine Rahmenwand, an der relativ viel Platz für die einzelnen Elemente zur Verfügung steht. Eine Kulisse 12 ist über Nieten 14 an die Rahmenwand angenietet. Kernstück der Kulisse 12 ist eine Hufeisenform, von der ein Schenkel 16 etwas nach unten hervorsteht. Durch die Hufeisenform ist ein Schlitz 18 gebildet, in den ein Kurbelzapfen von einem Schaltgerät geführt werden kann. An dem etwas längeren Schenkel 16 befindet sich noch eine Führungsfläche 20, durch welche die von dem Schlitz 18 vorgegebenen Auflageflächen verlängert werden, und die insbesondere beim Beginn der Einführung des Kurbelzapfens in den Schlitz 18 eine Rolle spielt.

FIG 2 zeigt nun einen Einschubrahmen 22 im Stand der Technik, welcher fest in die Schaltanlage 24 montiert ist. Zum Anschluss an zwei Kupferschienen 26 dienen Kontaktmesser 28, welche in den von dem Einschubrahmen gebildeten Freiraum hineinragen. An der Wand des Einschubrahmens 22 befindet sich die Kulisse 12. In den Einschubrahmen 22 soll nun ein Schaltgerät (Schalter) 30 eingeschoben werden. Dieser Schalter weist Lamellenkontakte 32 zur Kontaktierung der Kontaktmesser 28 auf. Beim Einführen des Schalters 30 in den Einschubrahmen wird der Schalter zunächst auf eine Montageschiene 34 aufgesetzt. Er wird dann soweit hineingeschoben, dass die Lamellenkontakte 32 in die Nähe der Kontaktmesser 28 geraten. Nachfolgend sind große Kräfte notwendig, um die Lamellenkontakte 32 auf die Kontaktmesser 28 aufzustecken. Hier wird nun eine Kurbel 36 verwendet, deren Kurbelwelle senkrecht zur durch die Pfeile 38 angegebenen Einschubsrichtung verläuft.

Die Figuren 3a bis 3d zeigen die Kulisse 12 und die von der Kulisse 12 geführte Kurbel 36 in verschiedenen Stadien des Zusammenführens. FIG 3a zeigt die Situation kurz, bevor die Kurbel gedreht wird. In FIG 3b kommt der Kurbelzapfen 40 in Anlage an den Abschnitt 20 des Schenkels 16 der Kulisse 12 und wandert dann hoch in den Schlitz 18 hinein.

Bei Drehung der Kurbel erreicht der Kurbelzapfen die in FIG 3c dargestellte Situation. Wird nun die Kurbel um 180° gedreht, wandert der Kurbelzapfen hoch und wieder herunter und erreicht die in FIG 3d gezeigte Lage. FIG 3d zeigt die waagerechte stabile Endstellung der Kurbel 36, bei der die Lamellenkontakte 32 auf die Kontaktmesser 28 des Einschubrahmens aufgesteckt sind. Ausgehend von FIG 3b muss die Kurbel als Verfahrantrieb in einem Winkel von 210° in die Endstellung gedreht werden.

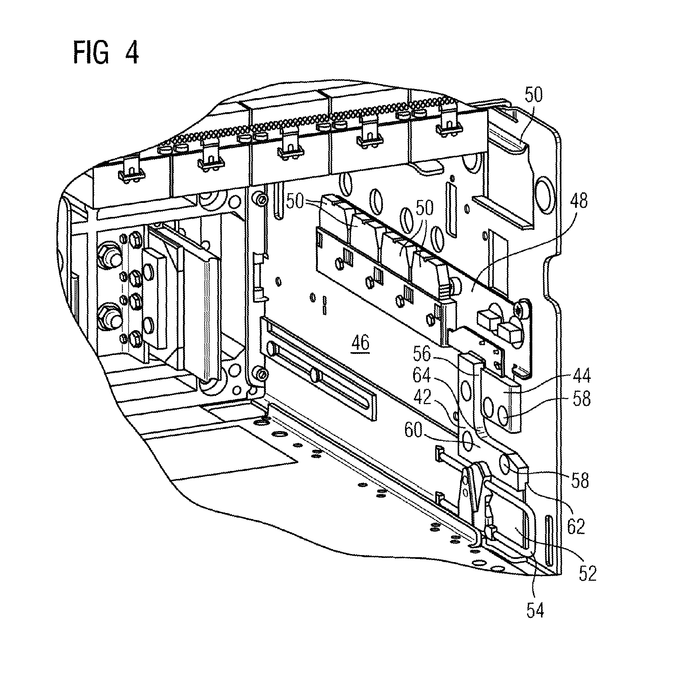

Während bei der in FIG 1 gezeigten Ausführungsform ausreichend Platz für eine recht groß ausgebildete Kulisse 12 ist, stellt die Erfindung eine Kulisse bereit, welche aus zwei getrennten Kulissenelementen 42 und 44 gebildet ist, die in FIG 4 gezeigt sind.

Bei der in FIG 4 gezeigten Situation ist an der Wand 46 des in FIG 4 gezeigten Einschubrahmens relativ wenig Platz zur Verfügung für die einzelnen Bauelemente. Zusätzlich zur Kulisse, welche aus den Elementen 42 und 44 besteht, ist an der Rahmenwand 46 eine Schaltstellungsmeldeeinheit 48 vorgesehen, welche aus Meldeschaltern 50 besteht, die anzeigen, wie der Schaltzustand eines zugehörigen Schalters des Schaltgeräts ist, d. h. ob ein oder aus. Oberhalb der Schaltstellungsmeldeeinheit 48 befindet sich eine Linearführung 50 aus gebogenem Blech, durch die das in den Einschubrahmen eingeführte Schaltgerät beim Einschieben oben geführt wird. Um das Schaltgerät unten zu führen, ist eine Montageschiene 52 vorgesehen, welche anhand eines Griffs 54 ausfahrbar ist, und die die Funktion einer Vorabführung des Schaltgeräts beim Einschub in den Einschubrahmen ausübt, so wie dies in der FIG 2 durch die Montageschiene 34 angedeutet ist.

Die erfindungsgemäße Kulisse besteht aus einem größeren Kulissenelement 42 und einem kleineren Kulissenelement 44. Zwischen den beiden Kulissenelementen befindet sich ein Schlitz oder Spalt 56 zur Führung eines Kurbelzapfens. Das kleinere Kulissenelement 44 hat im Wesentlichen eine Rechtecksform, die jedoch auf der zu dem Schlitz oder Spalt 56 hin weisenden Seite leicht abgerundet sein kann. Das kleinere Kulissenelement besteht aus Vergütungsstahl und ist an der Seite angeordnet, von der her der Einschub des Schaltgeräts erfolgt. Es ist mit Nieten 58 an der Wand 46 des Einschubrahmens befestigt. Auch das Kulissenelement 44 ist durch Nieten 58 an diesem Gehäuse befestigt.

Das größere Kulissenelement ist hier L-förmig ausgebildet, wobei die L-Form keine Notwendigkeit ist, sondern der untere Schenkel der L-Form, 60, gleichzeitig zum Führen der Montageschiene 52 dient, wozu eine Halbnut 62 (also eine Kante 62) vorgesehen ist.

Auch hier gibt es für den Kurbelzapfen eine dem Abschnitt 20 des Schenkels 16 der Kulisse 12 entsprechenden Abschnitt: Die L-Form steht nämlich über das Kulissenelement 44 hervor, wodurch ein Abschnitt 64 zu Beginn zur Führung des Zapfens dient. Der Abschnitt 64 an dem Kulissenelement 42 hat zusammen mit dem Schlitz 56 zwischen den beiden Kulissenelementen 42 und 44 dieselbe Funktion wie der Abschnitt 20 und der Schlitz 18 bei der Kulisse 12 gemäß FIG 1. Die in FIG 3 gezeigte Funktionsweise der Kulisse 12 ist daher auf die durch die beiden Elemente 42 und 44 gebildete zweiteilige Kulisse ohne weiteres übertragbar.

Wie in FIG 4 gleich zu sehen, ist die erfindungsgemäße zweiteilige Kulisse wesentlich Platz sparender als die einteilige Kulisse 12 gemäß dem Stand der Technik, insbesondere in ihrer Höhe. Durch die Übernahme der Aufgabe der Führung der Schiene 52 übernimmt das eine Kulissenelement 42 noch eine zusätzliche Funktion.

Weil bei Kurzschlüssen die Kräfte insbesondere auf das kleinere Kulissenelement 44 wirken, muss nur dieses Element besonders stabil hergestellt sein, so dass das größere Kulissenelement 42 aus gewöhnlichem Stahl hergestellt sein kann, und nur das kleinere Kulissenelement 44 aus Vergütungsstahl hergestellt sein muss, um den bei Kurzschlüssen wirkenden Kräften standzuhalten. Es wird durch die zweiteilige Ausführung der Kulisse daher auch eine Materialersparnis bewirkt. Ferner ist im Stand der Technik insbesondere eine große Kulisse 12, wie sie in FIG 1 gezeigt ist, schwer aus Vergütungsstahl herzustellen.

### Bezugszeichenliste

- 10: Rahmenwand
- 12: Kulisse
- 14: Nieten
- 16: Schenkel
- 18: Schlitz
- 20: Führungsfläche
- 22: Einschubrahmen
- 24: Schaltanlage
- 26: Kupferschienen
- 28: Kontaktmesser
- 30: Schalter
- 32: Lamellenkontakte
- 34, 52: Montageschienen
- 36: Kurbel
- 38: Pfeile
- 40: Kurbelzapfen
- 42, 44: Kulissenelemente
- 46: Rahmenwand
- 48: Schaltstellungsmeldeeinheit
- 50: Meldeschalter
- 54: Griff
- 56: Schlitz/Spalt
- 58: Nieten
- 60: unterer Schenkel der L-Form
- 62: Halbnut/Kante
- 64: Abschnitt

## Patentansprüche

1. Einschubrahmen (22) für einen Niederspannungs-Leistungsschalter (24) mit zwei Rahmenwänden (46), an denen jeweils eine Kulisse zum Führen eines Kurbelzapfens (40) angeordnet ist,
wobei der von der Kulisse zu führende Kurbelzapfen (40) über eine Kurbelwelle beweglich ist, welche Teil einer Kurbel (36) in einem Schaltgerät (30) ist, das in den Einschubrahmen einschiebbar ist,
**dadurch gekennzeichnet , dass**
die Kulisse aus zwei getrennten Kulissenelementen (42, 44) gebildet ist.

2. Einschubrahmen nach Anspruch 1,
**dadurch gekennzeichnet , dass**
die Kulissenelemente (42, 44) aus unterschiedlichen Materialien hergestellt sind.

3. Einschubrahmen nach Anspruch 2,
**dadurch gekennzeichnet , dass**
ein kleineres Kulissenelement (44) aus Vergütungsstahl hergestellt ist.

4. Einschubrahmen nach Anspruch 3,
**dadurch gekennzeichnet , dass**
das kleinere Kulissenelement das Kulissenelement ist, welches näher an der Seite angeordnet ist, von der der Einschub des Schaltgeräts her erfolgt (FIG 4; FIG 2).

5. Einschubrahmen nach einem der vorherigen Ansprüche,
**dadurch gekennzeichnet , dass**
ein größeres Kulissenelement (42) einen Abschnitt (60) hat, der über ein kleineres Kulissenelement (44) hinausragt, und an dem eine gekrümmte Führungsfläche (64) für den Kurbelzapfen ausgebildet ist.

6. Einschubrahmen nach Anspruch 5,
**dadurch gekennzeichnet , dass**
das größere Kulissenelement L-förmig ist, wobei der untere Schenkel (60) der L-Form zum Führen einer Montageschiene (52) dient.

7. Einschubrahmen nach einem der vorhergehenden Ansprüche,
**dadurch gekennzeichnet , dass**
jedes Kulissenelement (42, 44) an der zugehörigen Rahmenwand (46) angenietet (58) ist.
